# EUROPÄISCHE PATENTSCHRIFT

(11) **EP 1 466 298 B1**
(45) Veröffentlichungstag und Bekanntmachung des Hinweises auf die Patenterteilung: **23.11.2005**
(21) Anmeldenummer: 02779411.4
(22) Anmeldetag: 25.09.2002
(51) Int. Cl.: G06K 19/07, G06K 19/077, H05K 9/00

(54) **TRANSPONDER-ETIKETT**
TRANSPONDER LABEL
ETIQUETTE DE TRANSPONDEUR

(30) Priorität: 01.10.2001 DE 10148563
(43) Veröffentlichungstag der Anmeldung: 13.10.2004
(73) Patentinhaber: Tyco Electronics idento GmbH, 63322 Rödermark (DE)
(72) Erfinder: GSCHWINDT, Andreas, 64664 Alsbach-Hähnlein (DE)
(74) Vertreter: Katscher, Helmut
(86) Internationale Anmeldenummer: PCT/EP2002/010711
(87) Internationale Veröffentlichungsnummer: WO 2003/030093

(56) Entgegenhaltungen:
- EP-A- 0 354 131
- EP-A- 0 590 589
- DE-A- 19 542 900
- DE-U- 20 018 648

## Beschreibung

Die Erfindung betrifft ein Transponder-Etikett mit einem Datenträger und einer Antenne.

Transpondersysteme sind sehr vielfältig einsetzbar, wobei es für die verschiedenen Anwendungsgebiete eine große Anzahl unterschiedlich aufgebauter Systeme gibt. Ein funktionsfähiges Transpondersystem besteht immer aus einer Basiseinheit sowie aus einem Datenträger, der in Verbindung mit einer daran befestigten Antenne Informationen senden und empfangen kann. Die Kommunikation zwischen dem Datenträger und der Basiseinheit erfolgt kontaktlos über ein Hochfrequenzfeld, weshalb derartige Transpondersysteme auch als Radio Frequency Identification Systems (RFID-Systeme) bezeichnet werden. Die Energie, die der Datenträger zum Verarbeiten und Senden seiner gespeicherten Informationen benötigt, kann entweder durch eine zusätzliche externe Energiequelle (beispielsweise eine Batterie oder Solarzelle) zugeführt werden oder direkt der hochfrequenten Sendeleistung der Basiseinheit entnommen werden.

Neben der Art der Energieversorgung des Datenträgers unterscheiden sich die verschiedenen Transpondersysteme im Wesentlichen hinsichtlich der speicherbaren und übertragbaren Informationsmenge, der Übertragungsgeschwindigkeit der Informationen sowie hinsichtlich des maximalen Abstands, für den ein fehlerfreier Informationsaustausch zwischen der Basiseinheit und dem Datenträger möglich ist. Diese Eigenschaften werden unter anderem durch den Aufbau des Datenträgers und der Antenne sowie das zur Kommunikation zwischen Basiseinheit und Datenträger verwendete Hochfrequenzfeld bestimmt.

Bei passiven Transponder-Systemen, bei denen der Datenträger keine zusätzliche externe Energiequelle aufweist, findet die Energie- und Informationsübertragung zwischen Basiseinheit und dem Datenträger mittels induktiver Kopplung der jeweils spulenförmig ausgeführten Antennen statt.

Es sind Transponder-Etiketten bekannt (DE 200 18 648), bei denen ein passiv ausgeführter Transponderchip innerhalb des Etiketts angebracht ist. Durch die Möglichkeit, mit einem derartigen Transponder-Etikett Gegenstände oder diese Gegenstände mit sich führende Personen kontaktlos zu erfassen, werden viele neue Anwendungsgebiete in völlig unterschiedlichen Bereichen eröffnet. So werden derartige Transponder-Etiketten beispielsweise im Rahmen einer automatisierten Lagerhaltung oder als elektronische Artikelsicherung in einem Warenhaus verwendet. Transpondersysteme, allerdings nicht in Etikettenform, werden beispielsweise auch als elektronische Wegfahrsperre von Kraftfahrzeugen oder als Implantat zur Kennzeichnung und Unterscheidung von Tieren verwendet. Auch können Transpondersysteme in Verbindung mit geeigneten Sensoren zur automatisierten Abfrage und Kontrolle von Messwerten verwendet werden.

Die bekannten Transponder-Etiketten haben den Nachteil, dass sie nicht in direkter Umgebung von metallischen Gegenständen verwendet werden können, da in der Umgebung der metallischen Oberfläche die zur Energie- und Informationsübertragung verwendeten hochfrequenten elektromagnetischen Felder erheblich gestört werden.

Dadurch ist die Verwendung von Transponder-Etiketten jedoch stark eingeschränkt, da beispielsweise eine automatisierte Lagerhaltung bei Verwendung von Transponder-Etiketten nur für nicht-metallische Gegenstände möglich ist. Werden Transponder-Etiketten zur elektronischen Markierung in der industriellen Fertigung und/oder Lagerhaltung verwendet, so müsste parallel eine zusätzliche Maßnahme zur Markierung zumindest für Gegenstände aus Metall vorgesehen werden. Die Verwendung mehrerer Systeme zur Markierung wäre jedoch mit derart hohen Kosten verbunden, dass die Vorteile einer teilweisen Markierung mittels Transponder-Etiketten nicht ausreicht, um dieses System im Parallelbetrieb mit anderen Systemen einzurichten und zu betreiben.

Aufgabe der Erfindung ist es demzufolge, Transponder-Etiketten so zu gestalten, dass deren Verwendung auch auf der Oberfläche von metallischen Gegenständen möglich ist.

Diese Aufgabe wird erfindungsgemäß dadurch gelöst, dass auf der Befestigungsseite des Transponder-Etiketts eine Abschirmschicht angeordnet ist, die in einem nicht elektrisch leitenden und nicht magnetisierbaren Grundmaterial eingebettete Ferritpartikel aufweist. Durch die in dem Grundmaterial eingebetteten Ferritpartikel wird eine ausreichende Abschirmung des im Transponder-Etiketts angeordneten Datenträgers mit der damit verbundenen Antenne von der metallischen Oberfläche erreicht, so dass der Energie- und Informationsübertrag zwischen der Basiseinheit und dem so gestalteten Transponder-Etikett ungestört funktioniert.

Vorzugsweise ist vorgesehen, dass das nicht elektrisch leitende und nicht magnetisierbare Grundmaterial ein Kunststoff ist. Derartige Abschirmschichten mit in Kunststoff eingebetteten Ferritpartikeln können mit einfachen Mitteln an meist ebenfalls kunststoffhaltigen Transponder-Etiketten angebracht werden. Durch die Wahl geeigneter Kunststoffe kann die Abschirmschicht an verschiedene Anforderungen angepasst werden und so beispielsweise hohen mechanischen Belastungen oder aber hohen Temperatur- und Feuchtigkeitsschwankungen standhalten.

Besonders vorteilhafterweise ist vorgesehen, dass die Abschirmschicht eine flexible Abschirmfolie ist. Das Transponder-Etikett ist üblicherweise selbst aus mehreren flexiblen Schichten aufgebaut, in welchen der Datenträger mit der Antenne eingebettet ist. An der Befestigungsseite eines flexiblen Transponder-Etiketts kann mit einfachen Mitteln ohne große Änderungen im Herstellungsprozess zusätzlich die Abschirmfolie angebracht werden. Auf Grund der flexiblen Gestaltung kann das Transponder-Etikett auch auf unebenen Oberflächen sicher befestigt werden. Mit einer flexiblen Abschirmfolie versehene Transponder-Etiketten sind äußerst vielseitig verwendbar und in großer Anzahl kostengünstig herstellbar.

Einer Ausgestaltung des Erfindungsgedankens zufolge ist vorgesehen, dass die Abschirmschicht als eine starre Trägerschicht ausgebildet ist. Ein mit einer starren Abschirmschicht versehenes Transponder-Etikett schützt den darin befindlichen Datenträger mit der Antenne vor mechanischer Beanspruchung und ermöglicht empfindlichere oder komplexere Ausführungsformen von Datenträgern und Antennen. Wegen der starren Trägerschicht können damit versehene Transponder-Etiketten auch in vorgefertigte Markierungshalter eingesteckt und wieder entnommen werden, so dass ein Transponder-Etikett für verschiedene Gegenstände mehrfach verwendet werden kann.

Vorzugsweise ist vorgesehen, dass die Abmessungen der Abschirmschicht an die Größe des Datenträgers und der Antenne angepasst sind. Je nach verwendetem Material ist die Abschirmschicht ein wesentlicher Kostenfaktor bei der Herstellung von Transponder-Etiketten. Da für ein einwandfreies Funktionieren des Transponder-Etiketts auch auf metallischen Oberflächen nur der Bereich der Antenne und des Datenträgers abgeschirmt werden müssen, können die übrigen Bereiche des Transponder-Etiketts von der Abschirmschicht ausgenommen werden. Insbesondere bei Verwendung einer flexiblen Abschirmfolie ist dadurch eine kostengünstige Herstellung von abgeschirmten Transponder-Etiketten möglich.

Vorteilhafterweise ist vorgesehen, dass auf der Befestigungsseite des Transponder-Etiketts eine Klebeschicht und ein davon abziehbares Trägerblatt angeordnet sind. In Verbindung mit dem abziehbaren Trägerblatt kann das Transponder-Etikett ohne Schwierigkeiten aufbewahrt oder transportiert werden. Zum Anbringen des Transponder-Etiketts auf einer Oberfläche eines Gegenstandes wird das Transponder-Etikett von dem abziehbaren Trägerblatt gelöst und mit der Kleberschicht auf der Oberfläche befestigt. Die Handhabung solcher selbstklebender Transponder-Etiketten ist dadurch wesentlich vereinfacht, insbesondere sind keine zusätzlichen Geräte oder Klebemittel zum Anbringen des Transponder-Etiketts auf der dafür vorgesehenen Oberfläche erforderlich.

Einer vorteilhaften Ausgestaltung des Erfindungsgedankens zufolge ist vorgesehen, dass das Transponder-Etikett aus zwei getrennt herstellbaren Transponder-Etikett-Teilen zusammensetzbar ist. Dadurch vereinfachen sich die Herstellung, Verarbeitung und Lagerung der einzelnen Komponenten. Erst bei der Verwendung des Transponder-Etiketts muss der Anwender je nach Anforderung entscheiden, ob er einzelne oftmals kostenintensive Transponder-Etikett-Teile mitverwendet oder weglässt.

Vorzugsweise ist vorgesehen, dass ein Transponder-Etikett zusammenfügbar ist aus einem Transponder-Etikett-Oberteil, bestehend aus einem zwischen einer Trägerschicht und einer Etikettenschicht angeordneten Datenträger mit Antenne, wobei die Unterseite der Trägerschicht mit einer Klebeschicht versehen ist, und einem Transponder-Etikett-Unterteil, bestehend aus einer Abschirmschicht, deren Unterseite mit einer Klebeschicht versehen ist. Da die Abschirmschicht getrennt von dem Transpondersystem hergestellt wird, kann jeweils im Einzelfall entschieden werden, ob eine zusätzliche Abschirmschicht bei der Verwendung des Transponder-Etiketts notwendig ist. Das Transponder-Etikett-Oberteil ist auch ohne zusätzliche Abschirmschicht einsetzbar, so dass durch die größere Verwendungsbreite der getrennt hergestellten Transponder-Etikett-Teile die Wirtschaftlichkeit sowohl des Herstellers als auch des Verwenders von Transponder-Etiketten gesteigert werden kann.

Bei einem Verfahren zur Herstellung von Transponder-Etiketten werden ein Transponder-Etikett-Oberteil und ein Transponder-Etikett-Unterteil gesondert hergestellt und jeweils auf einem Trägerblatt angeordnet und zum Zusammenfügen wird ein Transponder-Etikett-Oberteil von dem zugeordneten Trägerblatt gelöst und auf ein Transponder-Etikett-Unterteil aufgebracht. Die einzelnen Transponder-Etikett-Teile können getrennt kostengünstig hergestellt und jeweils in großer Anzahl auf gemeinsamen Trägerblättern oder Trägerstreifen angeordnet werden. Sowohl das Zusammenfügen als auch das Bedrucken oder Beschreiben des Datenträgers kann weitgehend automatisiert auch für große Mengen von Transponder-Etiketten durchgeführt werden.

Eine weitere vorteilhafte Ausführung des Erfindungsgedankens ist Gegenstand eines weiteren Unteranspruchs.

Im Folgenden wird ein Ausführungsbeispiel der Erfindung näher erläutert, welches in der Zeichnung dargestellt ist. Es zeigt:
Fig. 1 eine Ansicht mehrerer auf einem gemeinsamen Trägerblatt angeordneten Transponder-Etiketten,
Fig. 2 einen Schnitt entlang der Linie II-II durch ein in Fig. 1 gezeigtes Transponder-Etikett,
Fig. 3 einen Schnitt durch ein Oberteil eines zweiteilig hergestellten Transponder-Etiketts und
Fig. 4 einen Schnitt durch ein Unterteil eines zweiteilig hergestellten Transponder-Etiketts.

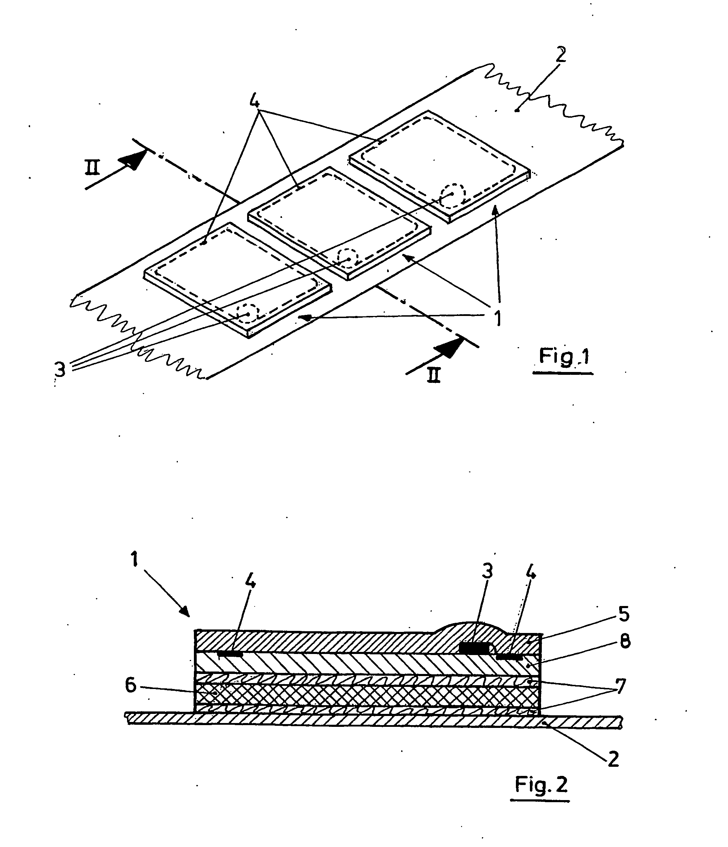

In Fig. 1 sind mehrere Transponder-Etiketten 1 gezeigt, die auf einem gemeinsamen bandförmigen Trägerblatt 2 angeordnet sind. In jedem Transponder-Etikett 1 befindet sich eingebettet ein Datenträger 3 mit einer spulenförmig angeordneten Antenne 4. Die Antenne 4 ist dabei ein entlang der Seitenkanten des Transponder-Etiketts 1 verlaufender elektrischer Leiter. Durch diese Antennengeometrie wird nahezu die gesamte Fläche des Transponder-Etiketts 1 für die induktive Kopplung und damit die Energie- und Informationsübertragung genutzt, so dass bei vorgegebener Größe der Transponder-Etiketten 1 bestmögliche Eigenschaften der Energie- und Informationsübertragung gewährleistet sind.

Sowohl die Transponder-Etiketten 1 mit den darin befindlichen Datenträgern 3 und Antennen 4 als auch das Trägerblatt 2 sind flexibel gestaltet. Während des Transports und der Lagerung kann das Trägerblatt 2 mit den darauf befindlichen Transponder-Etiketten 1 beispielsweise gerollt und so platzsparend verwahrt werden. Die flexiblen Transponder-Etiketten 1 können nach dem Lösen von dem Trägerblatt 2 auch auf unebenen Oberflächen sicher und dauerhaft befestigt werden.

In Fig. 2 ist ein Schnitt durch ein in Fig. 1 gezeigtes Transponder-Etikett 1 dargestellt. Der Datenträger 3 sowie die Antenne 4 sind zwischen einer flexiblen Etikettenschicht 5 und einer Trägerfolie 8 eingebettet. Je nach den Abmessungen der verwendeten Antenne 4 und des Datenträgers 3 wölbt sich die Oberfläche des Transponder-Etiketts 1 in den entsprechenden Bereichen. Unterhalb des Transponder-Etiketts 1 ist dessen Befestigungsseite vollständig von einer Abschirmschicht 6 bedeckt. Diese Abschirmschicht 6 besteht aus einer flexiblen Kunststoffschicht mit darin eingebetteten Ferritpartikeln. Durch diese Abschirmschicht 6 werden der Datenträger 3 und die Antenne 4 des Transponder-Etiketts 1 nahezu vollständig in Richtung der Oberfläche eines Gegenstandes abgeschirmt, auf der das Transponder-Etikett 1 befestigt werden kann.

Zwischen der Trägerfolie 8 und der Abschirmschicht 6 sowie zwischen der Abschirmschicht 6 und dem Trägerblatt 2 ist jeweils eine dünne Klebeschicht 7 angeordnet. Beim Abziehen des Transponder-Etiketts 1 von dem Trägerblatt 2 verbleiben die Schichten vollständig an dem Transponder-Etikett 1. Das Transponder-Etikett 1 kann so direkt auf die Oberfläche eines Gegenstandes aufgeklebt werden.

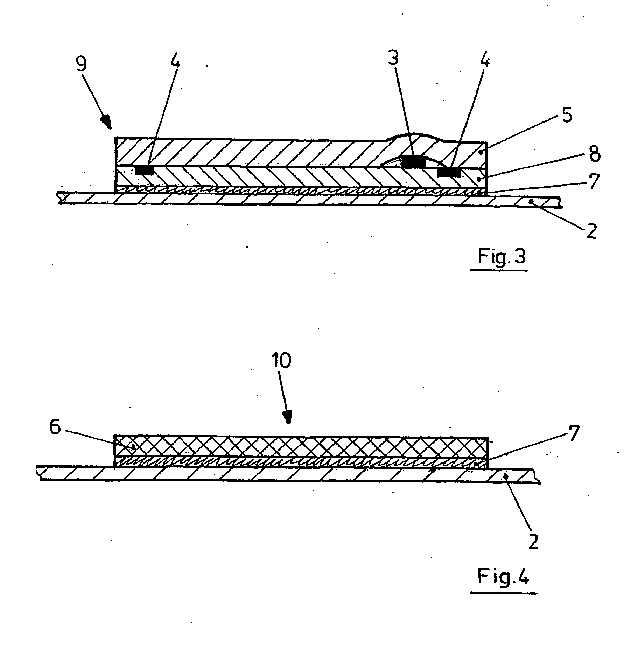

In den Fig. 3 und 4 wird ein aus zwei Transponder-Etikett-Teilen zusammenfügbares Transponder-Etikett 1 gezeigt. Ein Transponder-Etikett-Oberteil 9 weist eine Etikettenschicht 5 und eine darunter angeordnete Trägerschicht 8 auf, zwischen denen sich ein Datenträger 3 mit zugeordneter Antenne 4 befindet. Das Transponder-Etikett-Oberteil 9 weist an der Unterseite der Trägerschicht 8 eine Klebeschicht 7 auf, mittels derer das Transponder-Etikett-Oberteil 9 auf einem Trägerblatt 2 haftet.

Ein Transponder-Etikett-Unterteil 10 weist eine Abschirmschicht 6 auf, die ebenfalls mittels einer Klebeschicht 7 auf einem Trägerblatt 2 haftet.

Beide Transponder-Etikett-Teile 9, 10 können einfach in großer Stückzahl hergestellt werden. Sowohl der Datenträger 3 mit Antenne 4 als auch die Abschirmschicht 6 sind kostenintensive Bauteile, so dass aus Kostengründen eine Verwendung des Transpondersystems.mit Abschirmschicht 6 nur dann sinnvoll ist, wenn dessen Funktion ohne Abschirmschicht 6 wesentlich beeinträchtigt wäre. Bei vielen Anwendungen werden Transponder-Etiketten 1 mit zum Großteil einheitlicher Information auf verschiedenen Objekten mit unterschiedlichen Oberflächenmaterialien verwendet. In diesem häufigen Anwendungsfall ist es günstig, wenn erst bei der Anbringung des Transponder-Etiketts 1 entschieden werden muss, ob für einen zuverlässigen Betrieb das Transponder-Etikett-Oberteil 9 ausreicht oder in Verbindung mit dem Transponder-Etikett-Unterteil 10, also der zusätzlichen Abschirmschicht 6, auf dem zu kennzeichnenden Objekt angebracht werden muss. Beide Transponder-Etikett-Teile 9, 10 können in großer Anzahl auf einem gemeinsamen Trägerblatt 2 angeordnet, vertrieben und gelagert werden. Die Datenträger 3 der auf einem gemeinsamen Trägerblatt 2 haftenden Transponder-Etikett-Oberteile 9 können weitgehend automatisiert und damit kosten- und zeitgünstig mit Informationen beschrieben werden. Durch die getrennte Herstellung der beiden Transponder-Etikett-Teile 9, 10 vereinfachen sich auch schon auf Grund der geringeren Dicke der einzelnen Transponder-Etikett-Teile 9, 10 deren Lagerung, Verwendung und eventuelle Beschriftung.

Da auf Grund der kontaktlosen Informationsübertragung von dem Transponder-Etikett 1 zu einer Basisstation eine automatisierte Weiterverarbeitung der Informationen eines so gekennzeichneten Gegenstandes erfolgen kann, ist eine sichtbare Beschriftung des Transponder-Etiketts 1 zur Identifizierung nicht zwingend notwendig. Es ist dennoch denkbar und für manche Anwendungen sinnvoll, die Oberfläche des Transponder-Etiketts 1 beispielsweise mit zusätzlichen Informationen oder mit Werbung zu bedrucken. Insbesondere bei Verwendung des Thermodruckverfahrens ergeben sich bei getrennter Herstellung der Transponder-Etikett-Teile 9, 10 Vorteile bei dem Bedrucken und Verarbeiten wegen der geringeren Dicke und erhöhten Flexibilität der Transponder-Etikett-Teile 9, 10.

## Patentansprüche

1. Transponder-Etikett (1) mit einem Datenträger (3) und einer Antenne (4), **dadurch gekennzeichnet, dass** auf der Befestigungsseite des Transponder-Etiketts (1) eine Abschirmschicht (6) angeordnet ist, die in einem nicht elektrisch leitenden und nicht magnetisierbaren Grundmaterial eingebettete Ferritpartikel aufweist.

2. Transponder-Etikett (1) nach Anspruch 1, **dadurch gekennzeichnet, dass** das Grundmaterial ein Kunststoff ist.

3. Transponder-Etikett (1) nach Anspruch 1, **dadurch gekennzeichnet, dass** die Abschirmschicht (6) eine flexible Abschirmfolie ist.

4. Transponder-Etikett (1) nach Anspruch 1, **dadurch gekennzeichnet, dass** die Abschirmschicht (6) als eine starre Trägerschicht ausgeführt ist.

5. Transponder-Etikett (1) nach Anspruch 1, **dadurch gekennzeichnet, dass** die Abmessungen der Abschirmschicht (6) an die Abmessungen des Datenträgers (3) und der Antenne (4) angepasst sind.

6. Transponder-Etikett (1) nach Anspruch 1, **dadurch gekennzeichnet, dass** die Abschirmschicht (6) die Befestigungsseite des Transponder-Etiketts (1) vollständig bedeckt.

7. Transponder-Etikett (1) nach Anspruch 1, **dadurch gekennzeichnet, dass** auf der Befestigungsseite des mit der Abschirmschicht (6) versehenen Transponder-Etiketts (1) eine Klebeschicht (7) und ein davon abziehbares Trägerblatt (2) angeordnet sind.

8. Anordnung bestehend aus einem Trägerblatt und Transponder-Etiketten (1) nach Anspruch 1, **dadurch gekennzeichnet, dass** mehrere Transponder-Etiketten (1) auf dem gemeinsamen Trägerblatt (2) angeordnet sind.

9. Transponder-Etikett (1) nach Anspruch 1 oder Anspruch 8, **dadurch gekennzeichnet, dass** das Transponder-Etikett (1) aus zwei getrennt herstellbaren Transponder-Etikett-Teilen (9, 10) zusammengesetzt ist.

10. Transponder-Etikett (1) nach Anspruch 9, **dadurch gekennzeichnet, dass** das Transponder-Etikett (1) zusammengefügt ist aus einem Transponder-Etikett-Oberteil (9), bestehend aus einem zwischen einer Trägerschicht (8) und einer Etikettenschicht (5) angeordneten Datenträger (3) mit Antenne (4), wobei die Unterseite der Trägerschicht (8) mit einer Klebeschicht (7) versehen ist, und einem Transponder-Etikett-Unterteil (10), bestehend aus einer Abschirmschicht (6), deren Unterseite mit einer Klebeschicht (7) versehen ist.

11. Verfahren zur Herstellung von Transponder-Etiketten (1) nach einem der vorangehenden Ansprüche, **dadurch gekennzeichnet, dass** ein Transponder-Etikett-Oberteil (9) und ein Transponder-Etikett-Unterteil (10) gesondert hergestellt und jeweils auf einem Trägerblatt (2) angeordnet werden, wobei im Unterteil die Abschirmschicht (6) angeordnet ist, die in einem nicht elektrisch leitenden und nicht magnetisierbaren Grundmaterial eingebettete Ferritpartikel aufweist und zum Zusammenfügen ein Transponder-Etikett-Oberteil (9) von dem zugeordneten Trägerblatt (2) gelöst und auf ein Transponder-Etikett-Unterteil (10) aufgebracht wird.

## Claims

1. A transponder label (1) having a data storage medium (3) and an antenna (4), **characterised in that** a shielding layer (6) is arranged on the attachment side of the transponder label (1), which layer comprises ferrite particles embedded in a base material which is not electrically conductive and not magnetisable.

2. A transponder label (1) according to claim 1, **characterised in that** the base material is a plastics material.

3. A transponder label (1) according to claim 1, **characterised in that** the shielding layer (6) is a flexible shielding film.

4. A transponder label (1) according to claim 1, **characterised in that** the shielding layer (6) takes the form of a rigid support layer.

5. A transponder label (1) according to claim 1, **characterised in that** the dimensions of the shielding layer (6) are conformed to the dimensions of the data storage medium (3) and the antenna (4).

6. A transponder label (1) according to claim 1, **characterised in that** the shielding layer (6) completely covers the attachment side of the transponder label (1).

7. A transponder label (1) according to claim 1, **characterised in that** an adhesive layer (7) and a peel-off backing sheet (2) are arranged on the attachment side of the transponder label (1) provided with the shielding layer (6).

8. An arrangement consisting of a backing sheet and transponder labels (1) according to claim 1, **characterised in that** a plurality of transponder labels (1) are arranged on the common backing sheet (2).

9. A transponder label (1) according to claim 1 or claim 8, **characterised in that** the transponder label (1) is composed of two separately producible transponder label parts (9, 10).

10. A transponder label (1) according to claim 9, **characterised in that** the transponder label (1) is assembled from a transponder label upper part (9) consisting of a data storage medium (3) with antenna (4) arranged between a support layer (8) and a label layer (5), wherein the underside of the support layer (8) is provided with an adhesive layer (7), and a transponder label bottom part (10) consisting of a shielding layer (6) whose underside is provided with an adhesive layer (7).

11. A method for producing transponder labels (1) according to one of the preceding, claims, **characterised in that** a transponder label upper part (9) and a transponder label bottom part (10) are produced separately and are each arranged on a backing sheet (2), wherein in the bottom part there is arranged the shielding layer (6), which comprises ferrite particles embedded in a base material which is not electrically conductive and not magnetisable, a transponder label upper part (9) being detached from the associated backing sheet (2) for the purpose of assembly and applied to a transponder label bottom part (10).

## Revendications

1. Etiquette de transpondeur (1) comportant un support de données (3) et une antenne (4), **caractérisée en ce que** le côté de fixation de l'étiquette de transpondeur (1) comporte une couche de protection (6), comportant des particules de ferrite noyées dans un matériau de base non conducteur d'électricité et non magnétisable.

2. Etiquette de transpondeur (1) selon la revendication 1, **caractérisée en ce que** le matériau de base est constitué par un matériau plastique.

3. Etiquette de transpondeur (1) selon la revendication 1, **caractérisée en ce que** la couche de protection (6) est constituée par une feuille de protection flexible.

4. Etiquette de transpondeur (1) selon la revendication 1, **caractérisée en ce que** la couche de protection (6) est constituée par une couche de support rigide.

5. Etiquette de transpondeur (1) selon la revendication 1, **caractérisée en ce que** les dimensions de la couche de protection (6) sont adaptées aux dimensions du support de données (3) et de l'antenne (4).

6. Etiquette de transpondeur (1) selon la revendication 1, **caractérisée en ce que** la couche de protection (6) recouvre complètement le côté de fixation de l'étiquette de transpondeur (1).

7. Etiquette de transpondeur (1) selon la revendication 1, **caractérisée en ce qu'**une couche adhésive (7) et une feuille de support détachable (2) sont agencées sur le côté de fixation de l'étiquette de transpondeur (1) comportant la couche de protection (6).

8. Assemblage comprenant une feuille de support et des étiquettes de transpondeur (1) selon la revendication 1, **caractérisé en ce que** plusieurs étiquettes de transpondeur (1) sont agencées sur la feuille de support commune (2).

9. Etiquette de transpondeur (1) selon la revendication 1 ou selon la revendication 8, **caractérisée en ce que** l'étiquette de transpondeur (1) est composée de deux parties d'étiquette de transpondeur (9, 10) à fabrication séparée.

10. Etiquette de transpondeur (1) selon la revendication 9, **caractérisée en ce que** l'étiquette de transpondeur (1) est composée d'une partie supérieure de l'étiquette de transpondeur (9), comportant un support de données (3) avec une antenne (4) agencé entre une couche de support (8) et une couche d'étiquette (5), le côté inférieur de la couche de support (8) comportant une couche adhésive (7), et une partie inférieure de l'étiquette de transpondeur (10), comportant une couche de protection (6), dont le côté inférieur comporte une couche adhésive (7).

11. Procédé de fabrication d'étiquettes de transpondeur (1) selon l'une des revendications précédentes, **caractérisé en ce qu'**une partie supérieure de l'étiquette de transpondeur (9) et une partie inférieure de l'étiquette de transpondeur (10) sont fabriquées séparément et agencées respectivement sur une feuille de support (2), la couche de protection (6), comportant des particules de ferrite noyées dans un matériau de base non conducteur d'électricité et non magnétisable, étant agencée dans la partie inférieure, une partie supérieure de l'étiquette de transpondeur (9) étant détachée de la feuille de support correspondante (2) en vue de l'assemblage et appliquée sur une partie inférieure de l'étiquette de transpondeur (10).
